# EUROPEAN PATENT SPECIFICATION

(11) **EP 3 977 600 B1**
(45) Date of publication and mention of the grant of the patent: **02.12.2026**
(21) Application number: 20819418.3
(22) Date of filing: 01.06.2020
(51) Int. Cl.: H02K 7/14, H02K 7/04, H02K 9/06

(54) **ELECTRIC MOTOR FOR A POWER TOOL**
ELEKTROMOTOR FÜR EIN ELEKTROWERKZEUG
MOTEUR ÉLECTRIQUE POUR OUTIL ÉLECTRIQUE

(30) Priority: 03.06.2019 CN 201920830182 U
(43) Date of publication of application: 06.04.2022
(73) Proprietor: Milwaukee Electric Tool Corporation, Brookfield, WI 53005 (US)
(72) Inventor: HU, Shu, Bin, Dongguan City, Guangdong (CN)
(74) Representative: Marks & Clerk LLP
(86) International application number: PCT/US2020/035530
(87) International publication number: WO 2020/247307

(56) References cited:
- EP-A1- 2 889 107
- DE-A1- 102015 110 267
- KR-A- 20100 030 516
- US-A1- 2006 261 700
- US-A1- 2011 033 320
- US-A1- 2013 207 491
- US-A1- 2014 124 231
- US-A1- 2014 124 231
- US-A1- 2018 238 349

## Description

### FIELD OF THE INVENTION

The present invention relates to electric motors for use with power tools.

### BACKGROUND OF THE INVENTION

Many power tools use an electric motor, such as brushless DC motor, to drive the tool. A brushless DC motor typically includes a rotor and a stator. During operation, the rotor rotates at a relatively high-speed relative to the stator. If the motor is unbalanced, the power tool may vibrate or shake during use. Current balancing features include a plurality of bushings disposed on a shaft, for which the rotor rotates thereon. US2018/0238349 A1 discloses a prior art electric motor.

### SUMMARY OF THE INVENTION

The broadest scope of the present invention is defined by appended independent claim 1. Preferred embodiments of the present invention are defined by the appended dependent claims.

Described herein is an electric motor for use with a power tool. The electric motor includes a stator, a rotor rotatable relative to the stator, an output shaft coupled to the rotor for rotation with the rotor, a fan coupled to the output shaft for rotation with the output shaft and the rotor, and a balancing member coupled to the output shaft for rotation with the rotor. The output shaft defines a longitudinal axis about which the rotor rotates. The balancing member substantially balances a mass of the rotor about the longitudinal axis. The balancing member includes a bushing supported on the output shaft and is positioned between a face of the rotor and the fan. The bushing includes a balancing feature formed on an outer circumference of the bushing.

Also described herein is a power tool. The power tool includes a housing, a drive mechanism positioned within the housing, and an electric motor positioned within the housing and operable to drive the drive mechanism. The electric motor includes a stator, a rotor rotatable relative to the stator, an output shaft coupled to the rotor for rotation with the rotor, a fan coupled to the output shaft for rotation with the output shaft and the rotor, and a balancing member coupled to the output shaft for rotation with the rotor. The output shaft defines a longitudinal axis about which the rotor rotates. The balancing member substantially balances a mass of the rotor about the longitudinal axis. The balancing member includes a bushing supported on the output shaft and is positioned between a face of the rotor and the fan. The bushing includes a balancing feature formed on an outer circumference of the bushing.

### BRIEF DESCRIPTION OF THE DRAWINGS

FIG. 1 is a side view of a power tool.
FIG. 2 is a perspective view of a motor of the power tool shown in FIG. 1.
FIG. 3 is a perspective view of the motor of FIG. 2 with portions of the motor removed.
FIG. 4 is a perspective view of the motor of FIG. 3 with a balancing feature formed on a bushing.
FIG. 5 is a first side view of the motor of FIG. 3.
FIG. 6 is a second side view of the motor of FIG. 3.
FIG. 7 is a second perspective view of the motor of FIG. 3.

### DETAILED DESCRIPTION OF THE INVENTION

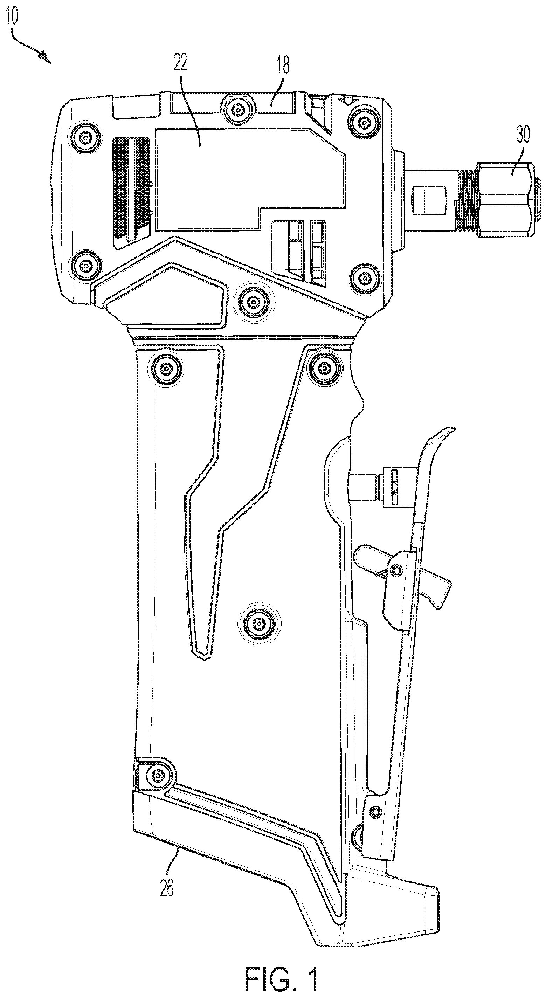

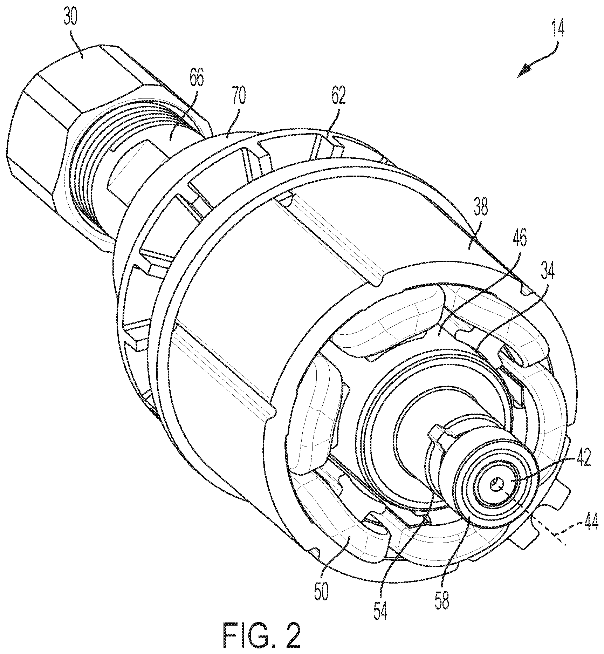

FIG. 1 illustrates a power tool 10 including an electric motor 14 (FIG. 2), such as a brushless DC motor. In the illustrated embodiment, the power tool 10 is a multi-tool. In other embodiments, the power tool may be, for example, a reciprocating saw, a circular saw, a jigsaw, a drill, an impact driver, a screwdriver, a pipe cutter, a grinder, a sander, a caulk gun, a grease gun, or the like. In further embodiments, the power tool 10 may be another type of device that uses an electric motor, such as a vacuum, a paint sprayer, lawn and garden equipment, or the like.

The motor 14 is positioned in a housing 18 of the power tool 10 and connected to a drive mechanism 22. The illustrated power tool 10 also includes a battery connection portion 26 formed on the housing 18. The battery connection portion 26 receives a battery pack (not shown) to electrically couple the battery pack to the motor 14 through a switch and other electronics. The battery pack may be, for example, a 9V, 12V, 18V, 28V, or 36V Li-ion or NIMH battery pack. When powered, the electric motor 14 drives the drive mechanism 22 to operate a working element 30 (e.g., a drill bit) connected to a chuck of the power tool.

FIG. 2 illustrates the electric motor 14 in more detail. The motor 14 includes a rotor 34, a stator 38, and a motor shaft 42. The rotor 34 includes permanent magnets (not shown) positioned in a body 46, or stack, of the rotor 34. The body 46 may be a laminated steel structure or powdered steel. The magnets are received in corresponding slots (not shown) formed in the body 46 and extend between a first face 46A and a second face 46B of the body 46. The illustrated stator 38 includes six electromagnetic coils 50 surrounding the rotor 34. The coils 50 are surrounded by laminations of the stator 38. When powered, the electromagnetic coils 50 create magnetic fields that interact with the permanent magnets in the rotor 34 to rotate the rotor 34 relative the stator 38. In other embodiments, the motor 14 may include any number of permanent magnets in the rotor and/or electromagnetic coils in the stator 38. Although in the illustrated embodiment the magnets are positioned within the rotor body 46 such that the magnets are interior permanent magnets, in other embodiments the magnets may be glued or otherwise affixed onto an outer surface of the rotor body 46 such that the magnets are surface permanent magnets.

The motor shaft 42, or output shaft, extends out of the rotor 34 to rotate with the rotor 34. The shaft 42 defines a longitudinal axis 44 about which the rotor 34 rotates. The shaft 42 is fixed to the rotor 34 such that movement of the rotor 34 is transmitted to the shaft 42. In some embodiments, the shaft 42 may be fixed to the rotor 34 using suitable securing means, such as splines, knurls, press-fitting, adhesives, or the like. In other embodiments, a portion of the shaft 42 may be non-cylindrical to rotationally fix the shaft 42 to the rotor 34, such that the shaft 42 rotates with the rotor 34.

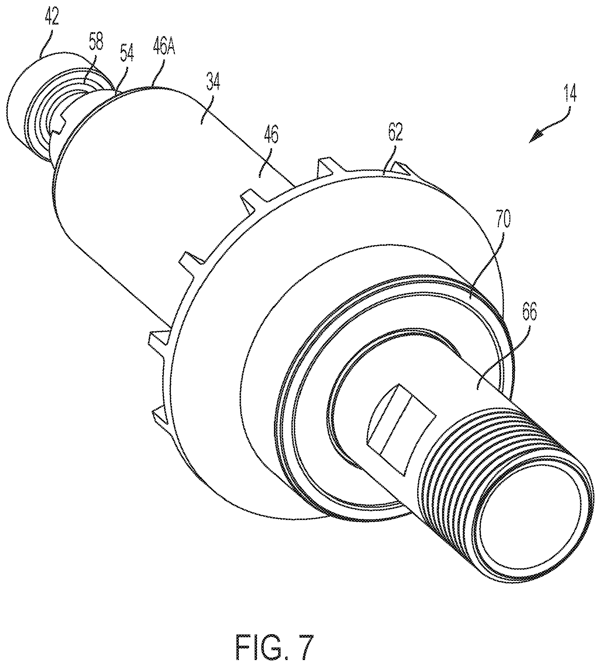

A first bearing 54 is positioned on a first end 58 of the shaft 42 to support the shaft 42, and thereby the motor 14, within the housing 18 of the power tool 10. A fan or impeller 62 is coupled to a second end 66 of the shaft 42 to rotate with the shaft 42 and the rotor 34. The fan 62 creates an airflow around the motor 14 to cool the motor 14 during operation of the power tool 10. A second bearing 70 (FIG. 7) is coupled to the second end 66 of the shaft 42 adjacent the fan 62 to help support the motor 14 in the housing 18 of the power tool 10.

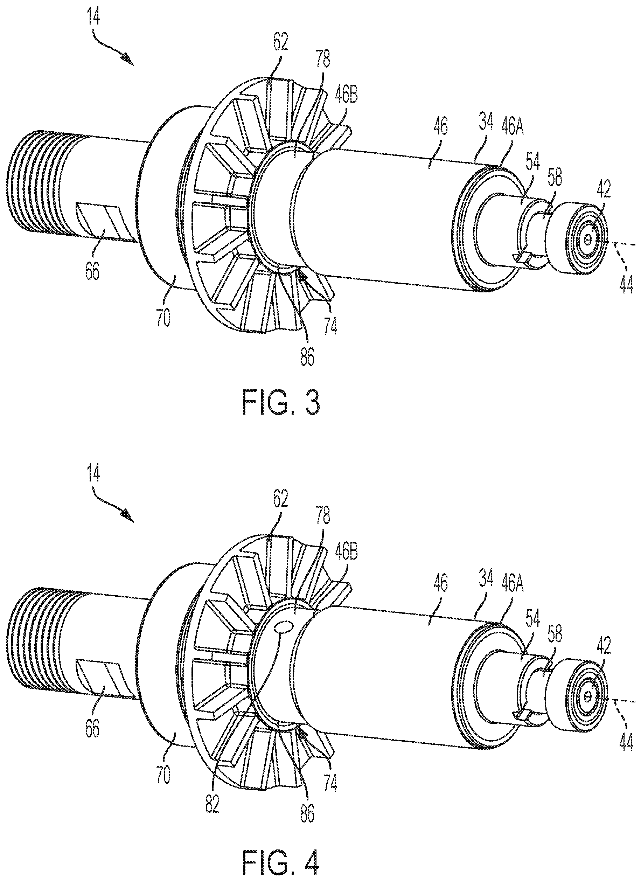

FIG. 3 illustrates the motor 14 with the stator 38 removed. According to the invention, the motor 14 further includes a balancing member 74 comprising a bushing 78. The illustrated bushing 78 is generally cylindrical with a hole extending through the center of the bushing such that the bushing is received onto the shaft 42. The bushing 78 is composed of a non-magnetic, high density material such as brass. In other embodiments, the bushing 78 is composed of an alternative non-magnetic material, aluminum, copper, or lead.

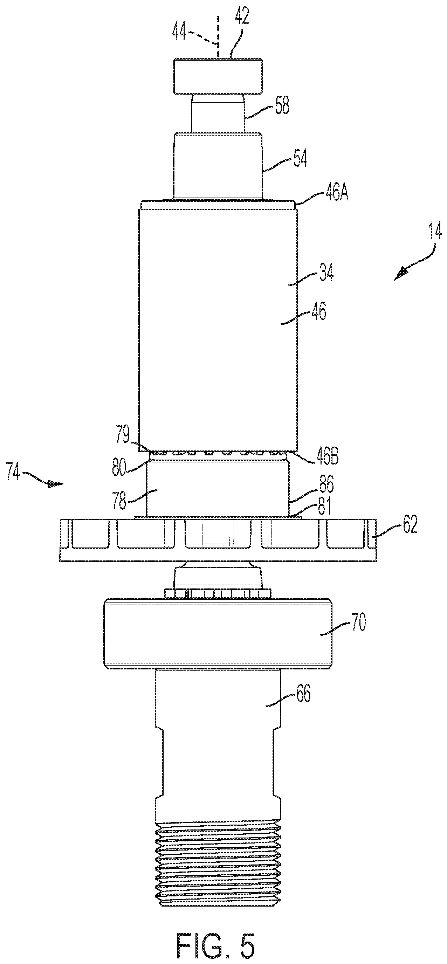

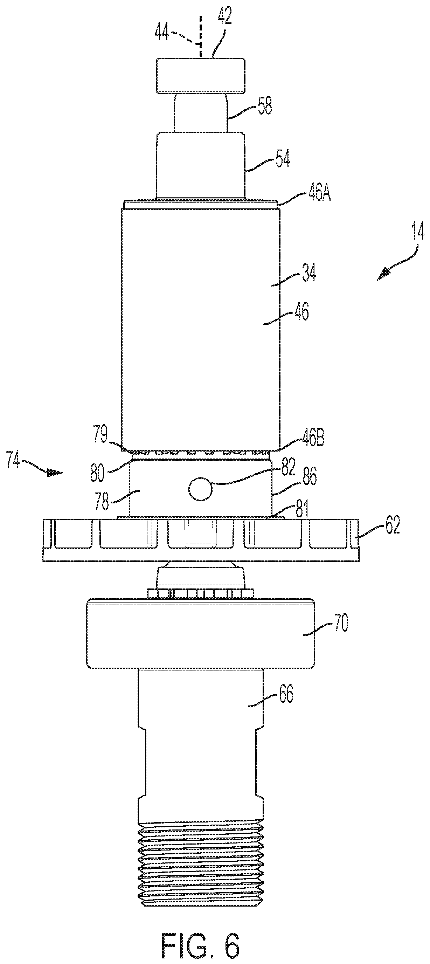

With reference to FIGS. 5 and 6, the bushing 78 is positioned between the rotor body 46 and the fan 62, such that the bushing 78 is coupled to the second face 46B of the rotor body 46 via a spline 79 feature formed on a first side 80 of the bushing 78, and the bushing is integrally formed with a portion of the fan 62 on a second side 81 of the bushing 78. The second face 46B of the rotor body 46 is defined as a rotor lamination stack or endcap, meaning that the bushing 78 is in contact with the rotor lamination stack or endcap, as well as the portion of the fan 62. In some embodiments, the bushing 78 may be coupled to the rotor body 46 through alternative securing means such as knurls, press-fitting, or the like. In additional embodiments, the bushing 78 may not be directly secured to the rotor body 46.

In the illustrated embodiment, the second side 81 of the bushing 78, is integrally molded to the fan 62 for rotation therewith. In additional embodiments, the bushing 78 may be distinct from the fan 62 and coupled to the fan 62 through alternative securing means. The bushing 78 may also be fixed to the shaft 42 to rotate with the rotor 34 and the shaft 42 relative to the stator 38. In some embodiments, the bushing 78 may be secured to the shaft 42 and/or the fan 62 by splines, knurls, press-fitting, or the like. In additional embodiments, the bushing 78 may be solely secured to either the fan 62 or the shaft 42.

When the bushing 78 is assembled on the shaft 42, the bushing 78 rotates with the rotor 34 to help balance the motor 14. If the motor 14 is still imbalanced, a balancing feature 82 (FIG. 4) is formed on the bushing 78 to correct the imbalance within a predetermined specification. As shown in FIG. 4-7, the illustrated balancing feature 82 is machined in the bushing 78 by drilling a hole into an outer circumferential surface 86 of the bushing 78, such that some amount of material is removed from the outer circumferential surface 86 of the bushing 78. The balancing feature 82 may extend from the outer circumferential surface 86 of the bushing to the hole formed in the center of the bushing 78, or the balancing feature 82 may solely form a recession in the outer circumferential surface 86 of the bushing 78. The balancing feature 82 is angled such that an axis formed through the center of the balancing feature 82 intersects with the longitudinal axis 44, defined by the shaft 42. In other embodiments, other balancing features may be formed on the bushing by cutting, shaving, or otherwise removing material from the bushing. Additionally or alternatively, multiple balancing features may be formed on the bushing 78 to balance the motor within the predetermined specification. The additional balancing features may be formed on the outer circumferential surface 86 of the bushing 78, or an axial surface of the bushing 78.

In the illustrated embodiment, the motor 14 includes a singular bushing 78, which abuts the fan 62 and the second face 46B of the rotor 46. Since the balancing feature 82 is formed on the bushing 78 disposed between the rotor 46 and the fan 62, the need for additional bushings is eliminated, reducing the minimum length of required for the motor 14. Reducing the length of the motor 14 may, in turn, reduce the associated cost to manufacture the motor 14.

The balancing member 74 discussed above helps balance an electric motor 14 in a power tool 10, or other device, within a predetermined specification to reduce vibration of the motor 14 during use. In particular, the balancing member 74 balances masses of the corresponding rotor 34 about the longitudinal axis 44 of the motor 14 to reduce vibrations of the motor 14 compared to motors without balancing members. Additional balancing members may be combined with the balancing member 74 described above on a single motor to achieve the desired balance.

The scope is defined by the claims.

## Claims

1. An electric motor (14) for use with a power tool (10), the electric motor comprising:
a stator (38);
a rotor (34) rotatable relative to the stator (38);
an output shaft (42) coupled to the rotor (34) for rotation with the rotor (34), the output shaft (42) defining a longitudinal axis (44) about which the rotor (34) rotates;
a fan (62) coupled to the output shaft (42) for rotation with the output shaft (42); and
a balancing member (74) coupled to the output shaft (42) for rotation with the rotor (34), the balancing member (74) substantially balancing a mass of the rotor (34) about the longitudinal axis (44);
wherein the balancing member (74) includes a bushing (78) supported on the output shaft (42) and positioned between a face (46B) of the rotor (34) and the fan (62), the bushing (78) including a balancing feature (82) formed on an outer circumference of the bushing (78);
**characterised in that**
the bushing (78) is made from one of brass, aluminum, copper, and lead, and is molded to the fan (62) for rotation therewith.

2. The electric motor of claim 1, wherein the balancing feature (82) is defined as a hole drilled into the outer circumference of the bushing (78).

3. The electric motor of claim 2, wherein:
(A) the balancing feature extends through a thickness of the bushing (78);
or
(B) the hole is angled such that a center axis of the hole intersects the longitudinal axis (44).

4. The electric motor of claim 1, wherein a plurality of balancing features (82) are formed onto the bushing.

5. The electric motor of claim 1, wherein the face (46B) of the rotor defines a rotor lamination stack, and wherein the balancing member (74) is in contact with the rotor lamination stack.

6. The electric motor of claim 1, wherein the bushing (78) surrounds a portion of the output shaft (42) adjacent the face of the rotor (34).

7. The electric motor of claim 1, wherein the balancing member (74) includes exactly one bushing (78).

8. A power tool (10) comprising:
a housing (18);
a drive mechanism (22) positioned within the housing (18); and
an electric motor (14) according to any preceding claim, the electric motor (14) being positioned within the housing (18) and operable to drive the drive mechanism (22).

## Patentansprüche

1. Elektromotor (14) zur Verwendung mit einem Elektrowerkzeug (10), wobei der Elektromotor Folgendes umfasst:
einen Stator (38);
einen Rotor (34), der relativ zu dem Stator (38) drehbar ist;
eine Abtriebswelle (42), die mit dem Rotor (34) zur Rotation mit dem Rotor (34) gekoppelt ist, wobei die Abtriebswelle (42) eine Längsachse (44) definiert, um die sich der Rotor (34) dreht;
einen Lüfter (62), der mit der Abtriebswelle (42) zur Drehung mit der Abtriebswelle (42) gekoppelt ist; und
ein Auswuchtelement (74), das mit der Abtriebswelle (42) zur Drehung mit dem Rotor (34) gekoppelt ist und im Wesentlichen eine Masse des Rotors (34) um die Längsachse (44) auswuchtet;
wobei das Auswuchtelement (74) eine Buchse (78) beinhaltet, die auf der Abtriebswelle (42) gelagert und zwischen einer Fläche (46B) des Rotors (34) und dem Lüfter (62) positioniert ist, wobei die Buchse (78) ein Auswuchtelement (82) beinhaltet, das auf einem Außenumfang der Buchse (78) gebildet ist;
**dadurch gekennzeichnet, dass**
die Buchse (78) aus einem von Messing, Aluminium, Kupfer und Blei hergestellt und an den Lüfter (62) zur Rotation damit geformt ist.

2. Elektromotor nach Anspruch 1, wobei das Auswuchtelement (82) als eine in den Außenumfang der Buchse (78) gebohrte Öffnung definiert ist.

3. Elektromotor nach Anspruch 2, wobei:
(A) sich das Auswuchtelement durch eine Dicke der Buchse (78) erstreckt;
oder
(B) das Loch so geneigt ist, dass eine Mittelachse des Lochs die Längsachse schneidet (44).

4. Elektromotor nach Anspruch 1, wobei an der Buchse eine Vielzahl von Auswuchtelementen (82) gebildet ist.

5. Elektromotor nach Anspruch 1, wobei die Fläche (46B) des Rotors einen Rotorlamellenstapel bildet und das Auswuchtelement (74) mit dem Rotorlamellenstapel in Kontakt steht.

6. Elektromotor nach Anspruch 1, wobei die Buchse (78) einen Abschnitt der Abtriebswelle (42), der an die Rotorfläche (34) angrenzt, umgibt.

7. Elektromotor nach Anspruch 1, wobei das Auswuchtelement (74) genau eine Buchse (78) beinhaltet.

8. Elektrowerkzeug (10), umfassend:
ein Gehäuse (18);
einen Antriebsmechanismus (22), der in dem Gehäuse (18) positioniert ist; und
einen Elektromotor (14) nach einem vorstehenden Anspruch, wobei der Elektromotor (14) innerhalb des Gehäuses (18) positioniert und zum Antreiben des Antriebsmechanismus (22) betätigbar ist.

## Revendications

1. Moteur électrique (14) destiné à être utilisé avec un outil électrique (10), le moteur électrique comprenant :
un stator (38) ;
un rotor (34) pouvant tourner par rapport au stator (38) ;
un arbre de sortie (42) couplé au rotor (34) pour tourner avec le rotor (34), l'arbre de sortie (42) définissant un axe longitudinal (44) autour duquel le rotor (34) tourne ;
un ventilateur (62) couplé à l'arbre de sortie (42) pour tourner avec l'arbre de sortie (42) ; et
un élément d'équilibrage (74) couplé à l'arbre de sortie (42) pour tourner avec le rotor (34), l'élément d'équilibrage (74) équilibrant sensiblement une masse du rotor (34) autour de l'axe longitudinal (44) ;
dans lequel l'élément d'équilibrage (74) inclut une bague (78) supportée sur l'arbre de sortie (42) et positionnée entre une face (46B) du rotor (34) et le ventilateur (62), la bague (78) incluant un élément d'équilibrage (82) formé sur une circonférence extérieure de la bague (78) ;
**caractérisé en ce que**
la bague (78) est fabriquée à partir de laiton, d'aluminium, de cuivre ou de plomb, et est moulée sur le ventilateur (62) pour tourner avec celui-ci.

2. Moteur électrique selon la revendication 1, dans lequel l'élément d'équilibrage (82) est défini comme un trou percé dans la circonférence extérieure de la bague (78).

3. Moteur électrique selon la revendication 2, dans lequel :
(A) l'élément d'équilibrage s'étend sur l'épaisseur de la bague (78) ;
ou
(B) le trou est incliné de telle sorte qu'un axe central du trou recoupe l'axe longitudinal (44).

4. Moteur électrique selon la revendication 1, dans lequel une pluralité d'éléments d'équilibrage (82) sont formés sur la bague.

5. Moteur électrique selon la revendication 1, dans lequel la face (46B) du rotor définit un empilement de tôles de rotor, et dans lequel l'élément d'équilibrage (74) est en contact avec l'empilement de tôles de rotor.

6. Moteur électrique selon la revendication 1, dans lequel la bague (78) entoure une partie de l'arbre de sortie (42) adjacente à la face du rotor (34).

7. Moteur électrique selon la revendication 1, dans lequel l'élément d'équilibrage (74) inclut exactement une bague (78).

8. Outil électrique (10) comprenant :
un boîtier (18) ;
un mécanisme d'entraînement (22) positionné à l'intérieur du boîtier (18) ; et
un moteur électrique (14) selon une quelconque revendication précédente, le moteur électrique (14) étant positionné à l'intérieur du boîtier (18) et pouvant fonctionner pour actionner le mécanisme d'entraînement (22).
